Europäisches Patentamt

European Patent Office

Office européen des brevets

(19)

(11) Publication number: **0 136 025 B1**

# EUROPEAN PATENT SPECIFICATION

(45) Date of publication of patent specification: **13.11.91**   (51) Int. Cl.⁵: **C09D 5/02**

(21) Application number: **84305482.6**

(22) Date of filing: **10.08.84**

(54) **Aqueous coating compositions containing polymer with improved rheology, especially for use in paints.**

(30) Priority: **30.08.83 GB 8323241**

(43) Date of publication of application:
**03.04.85 Bulletin 85/14**

(45) Publication of the grant of the patent:
**13.11.91 Bulletin 91/46**

(84) Designated Contracting States:
**AT BE DE FR GB IT NL SE**

(56) References cited:
**DE-A- 2 711 001**
**FR-A- 2 344 611**
**FR-A- 2 352 042**
**FR-A- 2 400 527**
**GB-A- 1 225 059**

(73) Proprietor: **IMPERIAL CHEMICAL INDUSTRIES PLC**
**Imperial Chemical House, Millbank**
**London SW1P 3JF(GB)**

(72) Inventor: **Nicks, Peter Francis**
**34, Switchback Road North**
**Maidenhead Berkshire(GB)**
Inventor: **Young, Gillian Anne**
**1330 Castlefield Avenue**
**Toronto, ON, M6B 4B3(CA)**

(74) Representative: **Kerr, Michael Arthur et al**
**Imperial Chemical Industries PLC Legal Department : Patents PO Box 6 Bessemer Road**
**Welwyn Garden City Herts, AL7 1HD(GB)**

## Description

This invention relates to water-based paint containing pigment dispersed in an aqueous composition.

Water-based paints are preferred to paints based wholly on organic solvents such as white spirit for reasons of reduced cost, reduced toxicity and increased safety. French Patent Specification FR 2 400 527 describes water-based paints which contain pigment dispersed in an aqueous composition which in turn contains a film-forming copolymer comprising various ethylenically unsaturated monomers and which also comprises cationisable moieties and poly (alkylene oxide) moieties. However, the film-forming copolymer is present in the composition as a dispersion of solid particles whereas for many purposes it would be preferred to use a paint in which the film-forming copolymer is dissolved in a solvent.

Water-based paints are known which contain pigment dispersed in an aqueous composition which in turn contains a solution of a film-forming copolymer containing carboxyl moieties. Generally these carboxyl groups are at least partially neutralised by a base such as an amine and the composition normally comprises also a proportion of an organic cosolvent, usually of higher boiling point than water, in order to improve the solubility and rheological characteristics of the copolymer in the aqueous phase.

A problem with paints comprising an aqueous solution of film-forming carboxylic copolymers is that as they dry, they do not show the uniform increase in viscosity which is characteristic of paints based on solutions of film-forming polymer in organic solvent. More particularly a paint containing a solution of film-forming polymer in an organic solvent, such as for example alkyd resin in white spirit, exhibits a uniform solids content/viscosity relationship when diluted with the same solvent. (It should be explained that dilution with solvent is the converse of drying and so it produces the same curve relating viscosity to concentration but it has the advantage of being easier to study experimentally). In contrast to paints containing solutions of copolymer in organic solvent, paints containing an aqueous solution of copolymer containing carboxyl groups, for example an addition copolymer or a polyester such as are available commercially for use in coating compositions, does not show a uniform relationship when diluted with water. When a solution of a carboxyl group-containing copolymer is progressively diluted with water from an initial polymer concentration of about 70% by weight in the co-solvent to a final polymer concentration of about 20% by weight in the diluted co-solvent, it is observed that the viscosity of the diluted solution passes through a minimum and then through a maximum before a uniform relationship between the solids content and the viscosity of the solution is resumed.

The anomalous behaviour on dilution with water of solutions of carboxyl-containing polymers in organic co-solvent has been discussed by Overton & Herb in Journal of Coatings Technology, 55 (No.700) May 1983, at page 33. It is a significant problem in the formulation of aqueous coating compositions which contain carboxyl group-containing polymers since it can occur over the wide range of solids concentration at which these compositions are used. There is a particular problem in the case of paints because the anomalous behaviour occurs in that region of copolymer solids content which is most preferred for satisfactory application of paint to a substrate with a brush or by spray. When a paint is applied to a substrate and the aqueous phase gradually evaporates the composition of the drying paint- and hence its rheology - follows in reverse the course which is followed when a solution of the polymer is diluted with water. Thus there is reached a stage at which there is a rapid viscosity rise leading to stickiness of application, followed by a temporary fall in the viscosity of the applied paint which causes paint applied to a vertical substrate to sag and to yield a final dry film of uneven thickness.

The problem can be avoided by formulating a paint at a very low solids content, but very thin coating films are then obtained and the application properties of the paint are unsatisfactory. The problem can be alleviated to some extent by increasing the number of carboxyl groups and the extent to which they are neutralised by a base. However, this must always be a compromise since an increase in the number of carboxyl groups and in the degree of neutralisation increases the water-sensitivity of the final coating, and also the viscosity of the coating composition may be too high at a preferred polymer solids content. The problem was usually alleviated by the use of a cosolvent which is miscible with, and is of higher boiling point than, water, and normally a compromise had to be accepted between the acid value of the polymer, the degree of neutralisation and the proportion of cosolvent.

We have now found that improved water-based paint can be obtained using solutions of certain selected water-dispersible polymers comprising both anionisable groups and non-ionisable water-soluble moieties. These solutions do not exhibit the anomalous increase in viscosity shown by solutions based on the copolymers previously used when diluted with water. Paints of this type can be formulated for application to a substrate by brush which have improved application properties such as "brushability", flow-out of brush marks and "lapping" with paint which has been previously applied.

According to this invention we provide a water-based paint containing:

2

A) a pigment and

B) an aqueous composition

wherein the pigment is dispersed in the aqueous composition B which composition B consists of

Bi) a water-soluble film-forming copolymer comprising

a) anionisable groups selected from -COOH, -SO$_3$H and -PO$_4$H$_2$ which groups are neutralised by a base and

b) non-ionisable water-soluble moieties selected from moieties of polyethylene glycol or its monoether, moieties of poly(meth)acrylamide and moieties of polyvinyl pyrrolidone

and

Bii) water

wherein the amount of the copolymer in the composition is from 20 to 70% wt% of the combined weights of the copolymer (B(i)) and water (B(ii)) characterised in that the copolymer (B(i))

(i) exists as a solution,

(ii) has a weight average molecular weight of from 2,000 to 15,000,

(iii)comprises from 0.3 to 3.6 moles/kg of the copolymer of the anionisable groups and

(iv) comprises as least 17 wt% (based on the weight of the copolymer) of the non-ionisable moieties which when they are poly(ethylene glycol) moieties have a molecular weight of not greater than 600 and which when they are poly(methacrylamide) or poly(vinyl pyrrolidone) moieties have a molecular weight of not greater than 2,000,

whereby when the amount of copolymer (B(i)) varies in the composition B between 20 and 70 wt%, there is no anomalous variation in the viscosity of the composition as measured at 25°C by a low shear viscometer.

The film-forming copolymer may be selected from a wide range of chemical types, for example vinyl or acrylic addition copolymers, polyesters, polyurethanes, polyureas, polyamides, polyethers or epoxides. Preferably the water-dispersible film-forming polymer is of a type which permits the regular distribution of the anionisable groups and non-ionisable water-soluble moieties along its length.

Particularly preferred types of film-forming copolymer, are vinyl or acrylic addition copolymers, polyesters, polyurethanes and polyureas, which are prepared by procedures enabling good control of molecular weight.

Suitable bases which can be used to neutralise anionisable groups are inorganic bases such as sodium hydroxide, potassium hydroxide and ammonia or organic bases such as amines, for instance dimethyl aminoethanol, triethylamine, dibutylamine or morpholine.

Different levels of water-soluble groups and moieties are preferred for different copolymer types, depending or the hydrophilicity or hydrophobicity of the backbone copolymer and the solubility of the water-soluble groups or moieties selected. However, the level of anionisable groups should be from 0.3 - 3.6 moles/kg of polymer and the copolymer should comprise at least 17 wt% (based on the weight of the copolymer) of non-ionisable water-soluble moieties. Preferably the copolymer comprises not more than 40% by weight of these moieties.

We have found that there is an optimum distribution of the total weight of non-ionisable water-soluble material present and the number of distinct moieties present in a copolymer. For example where the non-ionisable moieties are moieties of methoxypolyethylene glycol, it is only when these comprise individual non-ionisable moieties of molecular weight about 600 or less that the copolymer solution satisfies the dilution/viscosity test.

It is a general principle that the non-ionisable water-soluble moieties should be evenly distributed throughout the polymer, i.e. the ratio of the number of soluble moieties to the total weight of non-ionisable water-soluble material should be high. More specifically, the quantity and molecular weight of the non-ionisable water-soluble moieties should be such that, on average, there is more than one water-soluble moiety per copolymer molecule.

In the formulation of water-based paints according to this invention, one important characteristic of a suitable film-forming copolymer is that it quickly becomes insensitive to water after application to a substrate. This may be achieved by minimising the proportions of anionisable groups and non-ionisable water-soluble moieties and incorporating cross-linkable groups e.g. autoxidisable groups, or crosslinking agents which subsequently produce a complex structure.

A preferred copolymer containing anionisable groups for use in such paints is an acrylic addition copolymer of molecular weight in the range 6,000 - 12,000 which comprises carboxyl groups and moieties of a polyethylene glycol (introduced for example, by using methoxypolyethylene glycol (meth)acrylate as a comonomer) or molecular weight in the range 200 to 550, the total weight of the non-ionisable material not exceeding 20% by weight based on the weight of the film-forming copolymer, and the acid value in the range 20 to 200 mg KOH/g, preferably 50 to 120 mg KOH/g.

Another preferred copolymer containing anionisable groups is an acrylic addition copolymer containing carboxyl groups as above, and comprising moieties of poly(meth)acrylamide at a level not exceeding 20% by weight of the copolymer.

Typical acid comonomers for use in preparing a suitable film-forming addition copolymer, in conjunction with for example a poly(meth)acrylamide -containing derivative of (meth)acrylic acid or methoxypolyethylene glycol (meth)acrylate, include (meth)acrylic acid, itaconic acid, citraconic acid, crotonic acid, sorbic acid and fumaric acid. Typical additional comonomers include for instance methyl methacrylate, butyl acrylate, ethyl acrylate, 2-ethyl-hexyl acrylate, lauryl methacrylate, styrene and methyl styrene, vinyl acetate, vinyl chloride, vinylidene chloride, acrylonitrile and allyl alcohol. Particularly suitable copolymers are those comprising (meth)acrylic acid, with methyl methacrylate, butyl acrylate and/or 2-ethylhexyl acrylate.

The non-ionisable water-soluble moieties of poly(meth)acrylamide and polyvinyl pyrrolidone which are specified as useful in this invention are not discussed or exemplified in the same detail as moieties of polyethylene glycol but bearing in mind their similar properties, their behaviour is broadly similar to that of the polyethylene glycol moieties.

The paints may comprise other materials such as other polymers and additives appropriate to the above applications, for example fillers, crosslinking agents, anti-skinning agents, slip aids etc.

The invention is illustrated by the following Examples of which Example A is comparative and in which parts and percentages are by weight.

EXAMPLES 1 TO 4 AND COMPARATIVE EXAMPLE A

These Examples describe the preparation of five polyesters by co-reacting amounts by weight of adipic acid, dimethylolproprionic acid and neopentyl glycol as specified in Table 1. These components together with 0.1 wt% of 'Fascat' 4101 catalyst (commercially available from M&T Chemicals) and 3 wt% toluene were added to a reaction flask fitted with a stirrer, thermometer, steam condenser and a Dean & Stark trap. The weight percentages of catalyst and toluene are based on the total weight of reactants. The flask was connected to a nitrogen supply and its contents were refluxed at 190°C until an acid value as specified in Table 1 was achieved. Then amounts by weight of allyloxypolyethylene glycol as specified in Table 1 were added to the product of the co-reaction and the mixture was refluxed at 210 to 220°C until reaction was complete.

The resulting polyesters each had a molecular weight (weight average) in the range 6,000 to 7,000 and an acid value in the range 50 to 80 mg KOH/g. They were neutralised with di-methylaminoethanol to 105% of the final acid value. They were each diluted with distilled water to give a range of sample solutions varying in solids content from 20% to 90% and their viscosities measured using a Brookfield low-shear viscometer. It was found from a plot of viscosity against polyester content, that only the solutions of Examples 1, 2, 3 and 4 were useful in a paint according to the invention.

## TABLE 1

| Example | | 1 | 2 | 3 | 4 | A |
|---|---|---|---|---|---|---|
| Reactants | wt% allyloxy-polyethylene glycol. mol.wt. 350 | 40.3 | 33.1 | 26.0 | 17.0 | 10.0 |
| adipic acid | | 657.0 | 657.0 | 657.0 | 657.0 | 657.0 |
| dimethylolpropionic acid | | 281.4 | 214.4 | 160.8 | 107.7 | 73.7 |
| neopentyl glycol | | 197.6 | 249.6 | 291.2 | 332.8 | 358.8 |
| acid value mg KOH/g | | 175 | 149 | 128 | 102 | 92 |
| allyloxypolyethylene glycol | | 647.5 | 472.5 | 332.5 | 192.5 | 105.0 |
| Example | | 1 | 2 | 3 | 4 | A |

## Claims

1. A water-based paint containing:
   A) a pigment and
   B) an aqueous composition
   wherein the pigment is dispersed in the Composition B which composition B consists of
   Bi) a water-soluble film-forming copolymer comprising
   a) anionisable groups selected from -COOH, $-SO_3H$ and $-PO_4H_2$ which groups are neutralised by a base and
   b) non-ionisable water-soluble moieties selected from moieties of polyethylene glycol or its monoether, moieties of poly(meth)acrylamide and moieties of polyvinyl pyrrolidone and

Bii) water

wherein the amount of the copolymer in the composition is from 20 to 70% wt% of the combined weights of the copolymer (B(i)) and water (B(ii)) characterised in that the copolymer (B(i))

(i) exists as a solution,

(ii) has a weight average molecular weight of from 2,000 to 15,000,

(iii) comprises from 0.3 to 3.6 moles/kg of the copolymer of the anionisable groups and

(iv) comprises as least 17 wt% (based on the weight of the copolymer) of the non-ionisable moieties which when they are poly(ethylene glycol) moieties have a molecular weight of not greater than 600 and which when they are poly(methacrylamide) or poly(vinyl pyrrolidone) moieties have a molecular weight of not greater than 2,000,

whereby when the amount of copolymer (B(i)) varies in the composition B between 20 and 70 wt%, there is no anomalous variation in the viscosity of the composition as measured at 25° C by a low shear viscometer.

2. A paint according to Claim 1 wherein the anionisable and non-ionisable groups are regularly distributed along the length of the film-forming polymer.

3. A paint according to Claim 1 or Claim 2 wherein there are more than one non-ionisable groups per molecule of polymer.

**Revendications**

1. Peinture à base d'eau, comprenant:

A) un pigment, et

B) une composition aqueuse

dans laquelle le pigment est dispersé dans la composition B, composition B qui consiste

Bi) en un copolymère filmogène hydrosoluble comprenant

a) des groupes anionisables choisis entre les groupes -COOH, -SO$_3$H et -PO$_4$H$_2$, groupes qui sont neutralisés par une base, et

b) des groupements hydrosolubles non ionisables choisis entre des groupements polyéthylène-glycol ou son mono-éther, des groupements poly(méth)acrylamide et des groupements polyvinylpyrrolidone,

et

Bii) en eau

la quantité du copolymère dans la composition étant comprise dans l'intervalle de 20 à 70 % en poids, sur la base de la somme des poids du copolymère (B(i)) et de l'eau (B(ii)), caractérisée en ce que le copolymère (B(i))

(i) est présent sous forme d'une solution,

(ii) possède une moyenne pondérale du poids moléculaire de 2000 à 15 000,

(iii) comprend 0,3 à 3,6 moles des groupes anionisables par kg du copolymère, et

(iv) comprend au moins 17 % en poids (sur la base du poids du copolymère) des groupements non ionisables qui, lorsqu'il s'agit de groupements poly(éthylène-glycol), possèdent un poids moléculaire non supérieur à 600 et qui, lorsqu'il s'agit de groupements poly(méthacrylamide) ou poly-(vinylpyrrolidone), possèdent un poids moléculaire non supérieur à 2000,

aucune variation anormale de viscosité de la composition, telle qu'elle est mesurée à 25° C au moyen d'un viscosimètre à faible cisaillement, n'existant lorsque la quantité de copolymère (B(i)) varie dans la composition B dans l'intervalle de 20 à 70 % en poids.

2. Peinture suivant la revendication 1, dans laquelle les groupements anionisables et les groupes non ionisables sont distribués régulièrement le long dudit polymère filmogène.

3. Peinture suivant la revendication 1 ou la revendication 2, dans laquelle il existe plus d'un groupe non ionisable par molécule de polymère.

**Patentansprüche**

1.  Anstrichmittel auf Wasserbasis, welches

    A) ein Pigment und

    B) eine wäßrige Zusammensetzung

enthält, wobei das Pigment in der Zusammensetzung B dispergiert ist und die Zusammensetzung B aus folgendem besteht:

    Bi) einem wasserlöslichen, filmbildenden Copolymer, das folgendes enthält:

        a) aus -COOH, -SO$_3$H und -PO$_4$H$_2$ ausgewählte anionisierbare Gruppen, die durch eine Base neutralisiert sind, und

        b) nichtionisierbare, wasserlösliche Gruppierungen, die ausgewählt sind aus Gruppierungen von Polyethylenglycol oder dessen Monoether, Gruppierungen von Poly(meth)acrylamid und Gruppierungen von Polyvinylpyrrolidon

    und

    Bii) Wasser,

wobei die Menge des Copolymers in der Zusammensetzung 20 bis 70 Gew.%, bezogen auf die vereinigten Gewichte des Copolymers (B(i)) und Wassers (B(ii)) ausmacht, dadurch gekennzeichnet, daß das Copolymer (B(i))

    (i) als Lösung vorliegt,

    (ii) ein gewichtsmäßiges Durchschnittsmolekulargewicht von 2000 bis 15 000 besitzt,

    (iii) 0,3 bis 3,6 Mol/kg des Copolymers von den anionisierbaren Gruppen enthält und

    (iv) mindestens 17 Gew.%, bezogen auf das Gewicht des Copolymers, von den nichtionisierbaren Gruppierungen enthält, welche, wenn sie aus Poly(ethylenglycol)-Gruppierungen bestehen, ein Molekulargewicht von nicht mehr als 600 aufweisen, und, wenn sie aus Poly(methacrylamid)- oder Poly(vinylpyrrolidon)-Gruppierungen bestehen, ein Molekulargewicht von nicht mehr als 2000 aufweisen,

wobei, wenn die Menge des Copolymers (B(i)) in der Zusammensetzung B zwischen 20 und 70 Gew.% variiert, keine anomale Änderung in der Viskosität der Zusammensetzung, gemessen bei 25° C durch ein Viskosimeter mit niedriger Scherung, vorliegt.

2.  Anstrichmittel nach Anspruch 1, bei welchem die anionisierbaren und die nichtionisierbaren Gruppen regelmäßig entlang der Länge des filmbildenden Polymers verteilt sind.

3.  Anstrichmittel nach Anspruch 1 oder 2, bei welchem mehr als eine nichtionisierbare Gruppe je Molekül des Polymers vorliegt.